# EUROPÄISCHE PATENTSCHRIFT

(11) **EP 2 910 481 B1**
(45) Veröffentlichungstag und Bekanntmachung des Hinweises auf die Patenterteilung: **20.01.2016**
(21) Anmeldenummer: 14156309.8
(22) Anmeldetag: 24.02.2014
(51) Int. Cl.: B65B 69/00, B65G 51/01

(54) **Verfahren zur Teilentleerung von schwimmfähigen Gegenständen sowie Vorrichtung zur Durchführung des Verfahrens**
Method for partial emptying of buoyant objects and device for carrying out the method
Procédé de vidange partielle d'objets pouvant flotter et dispositif permettant de mettre en oeuvre ce procédé

(43) Veröffentlichungstag der Anmeldung: 26.08.2015
(73) Patentinhaber: LTW Intralogistics GmbH, 6922 Wolfurt (AT)
(72) Erfinder: Eberle, Konrad, 6900 Bregenz (AT); Gerber, Urs, 6900 Bregenz (AT); Baldauf, Christian, 6933 Doren (AT); Tumler, Thomas, 6972 Hard (AT)
(74) Vertreter: Hentrich Patentanwälte PartG mbB

(56) Entgegenhaltungen:
- EP-A1- 0 425 331
- EP-A1- 1 007 455
- EP-A2- 0 167 082
- FR-A1- 2 661 163
- FR-A1- 2 731 979
- NL-C1- 1 006 497

## Beschreibung

Die Erfindung betrifft ein Verfahren zur Teilentleerung von schwimmfähigen Gegenständen sowie eine Vorrichtung zur Durchführung dieses Verfahrens. Ferner umfasst die Erfindung ein Verfahren zur Kalibrierung einer Vorrichtung zur Durchführung des Verfahrens.

Aus dem Stand der Technik sind Verfahren bekannt, die zur Entleerung von schwimmfähigen Gegenständen in ein Becken dienen. Die Entleerung von Gegenständen (z.B. Schüttgut) in ein Becken bietet den Vorteil, dass diejenigen nicht beschädigt werden, welche gegenüber Stößen empfindlich sind. So können beispielsweise Maschinenteile schonend entleert werden, die eine empfindliche Oberfläche oder Beschaffenheit aufweisen. Hierbei kann das Bad beispielsweise ein spezielles Medium sein, das den Gegenständen ggfs. zusätzlich noch einen Korrosionsschutz bietet.

Weiterhin werden aber auch in der Sortierung, Lagerung und Verpackung von Obst oder Gemüse schonende Verfahren benötigt, die die Produkte derart handhaben, dass diese nicht durch den Einsatz von Maschinen oder aufgrund gegenseitiger Stöße Schaden nehmen.

Ein Verfahren zur Entleerung von schwimmfähigem Obst und Gemüse, insbesondere von Äpfeln, Birnen und Tomaten aus einem Container ist in der EP 1 007 455 A1 beschrieben. Dazu ist bei jedem Entleervorgang eine vollständige Entleerung der Ladehilfsmittel, d.h. der Kisten oder der Container durch ein Eintauchen des Ladehilfsmittels in ein Becken vorgesehen durch eine Ausschüttbewegung, z.B. in Form eines Verkippens innerhalb des Beckens. Um nur eine bestimmte, d.h. begrenzte Anzahl an Äpfeln abzutransportieren, müssen an den Entleerstationen zusätzliche Erfassungsvorrichtungen wie Lichtschranken, Kameras oder dergleichen zur Erfassung der entleerten Äpfel eingesetzt werden. Soll dann nur eine Teilmenge der im Container enthaltenen Äpfel verarbeitet werden, so wird der Container dennoch vollständig in das Becken ausgeleert. Erst anschließend wird durch zusätzliche, sehr aufwändige Vorrichtungen sichergestellt, dass nur der tatsächlich benötigte Teil der Äpfel weitertransportiert und/oder weiterverarbeitet wird.

Es ist daher die Aufgabe der vorliegenden Erfindung, ein Verfahren, eine Vorrichtung zur Durchführung des Verfahrens sowie ein Verfahren zur Kalibrierung der Vorrichtung bereitzustellen, die eine Teilentleerung von schwimmfähigen Gegenständen aus einem Ladehilfsmittel realisieren.

Diese Aufgabe wird durch ein Verfahren zur Teilentleerung von schwimmfähigen Gegenständen, die in einem zumindest eine Durchtrittsöffnung aufweisenden Ladehilfsmittel gelagert sind, gelöst, welches die Schritte umfasst:
A) Festlegung eines teilzuentleerenden Verarbeitungsgewichts,
B) Ermitteln eines Füllgewichts der Gegenstände im Ladehilfsmittel mittels einer ersten Wiegung,
C) zumindest teilweises Eintauchen des Ladehilfsmittels (9) in ein flüssiges Bad,
D) Positionieren oder Bewegen des Ladehilfsmittels (9) für eine in Abhängigkeit des Füllgewichts (16) und des Verarbeitungsgewichts (19) vordefinierte Verweildauer (15) im Bad derart, dass eine im Mittel konstante Strömung gegenüber dem Ladehilfsmittel (9) vorliegt, und dass die Durchtrittsöffnung (18) zumindest teilweise unterhalb einer Füllstandsoberfläche des Bades angeordnet ist, wobei die Gegenstände von der Strömung mitgenommen werden, sowie
E) Herausheben des zumindest teilweise entleerten Ladehilfsmittels aus dem Bad nach Ablauf der Verweildauer.

Dieses Verfahren befriedigt das seit langem bestehende Bedürfnis eine zuverlässige Teilentleerung eines Ladehilfsmittels vorzunehmen, aufgrund der Abhängigkeit der Verweildauer vom Füllgewicht einerseits und vom Verarbeitungsgewicht andererseits. Es ist nicht nötig, das Ladehilfsmittel vollständig zu entleeren, welches in Form eines Ladungsträgers, einer Kiste, eines Kleinladungsträgers (KLT) oder auch in Form einer Gitterbox ausgeführt sein kann. Aufgrund der Abhängigkeit der Verweildauer vom Füllgewicht des Ladehilfsmittels und ihrer Abhängigkeit vom teilzuentleerenden Verarbeitungsgewicht ist diejenige Zeitspanne vorgegeben, für die das Ladehilfsmittel im Bad verweilen muss, um die schwimmfähigen Gegenstände an die Oberfläche des Bades auftreiben und durch die Strömung abtransportieren zu lassen. Dabei muss die Strömung im Mittel (Mittelwert ihrer Strömungsgeschwindigkeit), d.h. gemittelt z.B. über die Verweildauer konstant sein. Somit kommt es einerseits in Betracht, dass das Ladehilfsmittel im Bad entgegen der Entleerrichtung bewegt wird, womit eine konstante Strömung gegenüber des teilzuentleerenden Ladehilfsmittels realisiert ist. Dabei erfolgt zugleich eine Anfahr- und/oder Bremsbewegung (Beschleunigung) des Ladehilfsmittels im Bad in horizontaler Richtung. Ebenso ist es andererseits möglich, dass mit Hilfe einer Pumpe (Zirkulationspumpe) im Bad eine konstante Strömung erzeugt wird, wodurch das Ladehilfsmittel beim Eintauch- und Heraushebevorgang ausschließlich eine vertikale Bewegung durchläuft.

Je voller das Ladehilfsmittel mit den Gegenständen beladen ist, desto größer ist die wirkende Auftriebskraft auf die schwimmfähigen Gegenstände, da die weiter unten im Ladehilfsmittel gelagerten schwimmfähigen Gegenstände die darüber liegenden Gegenstände zusätzlich nach oben drücken. Die Auftriebskraft entspricht dabei der Gewichtskraft der durch die schwimmfähigen Gegenstände verdrängten Flüssigkeit im Bad (Archimedisches Prinzip). Je mehr Flüssigkeit des Bades verdrängt wird, desto größer ist also der Auftrieb der schwimmfähigen Gegenstände. Die Auftriebskraft ist definiert als das Produkt aus dem Volumen der verdrängten Flüssigkeit, der Dichte der Flüssigkeit und des Orts- oder Gewichtsfaktors g. Ein Gegenstand ist schwimmfähig, wenn seine Gewichtskraft gleich oder kleiner als die Gewichtskraft der verdrängten Flüssigkeit ist. Die Gewichtskraft des Gegenstandes ist definiert als das Produkt aus seiner Masse, seiner Dichte, sowie des Ortsfaktors g. Die Masse oder das Gewicht des Gegenstands ist wiederum definiert als das Produkt aus der Dichte des Gegenstandes und des Volumens.

Wenn also nur ein geringes Verarbeitungsgewicht (von z.B. 20 kg) entleert werden soll, so ist aufgrund der größeren Auftriebskraft bei einem höheren Füllgewicht (von z.B. 200 kg) die Verweildauer kürzer als bei einem geringen Füllgewicht (von z.B. 70 kg). Mit anderen Worten ist also ein teilzuentleerendes Verarbeitungsgewicht schneller entleert, wenn das Ladehilfsmittel sehr voll ist gegenüber einem nahezu leeren Ladehilfsmittel.

Es hat sich gezeigt, dass es außerdem auch möglich ist, die Verweildauer in Abhängigkeit des Kalibers oder Durchmessers, d.h. in Abhängigkeit der ermittelten Abmessungen der Gegenstände zu bestimmen. Dies führt jedoch zu schlechteren Ergebnissen hinsichtlich der Entleermenge für Obst oder Gemüse, da solche mit den gleichen Abmessungen dennoch eine andere bzw. unterschiedliche Dichte aufweisen können. Dies resultiert in einem ungleichmäßigen Auftriebsverhalten in einer Flüssigkeit.

Es hat sich im Rahmen der Erfindung daher als bevorzugt erwiesen, die Verweildauer zumindest vor Schritt C) festzulegen durch die Schritte:
F) Ermitteln eines Durchschnittsentleergewichts für die Gegenstände bezogen auf eine Zeiteinheit in Abhängigkeit des Füllgewichts,
G) Vergleichen des Durchschnittsentleergewichts mit dem Verarbeitungsgewicht, und
H) Bestimmen eines der Verweildauer entsprechenden Vielfaches der Zeiteinheit.

Durch diese Schritte kann eine Art Durchschnittsentleergeschwindigkeit ermittelt werden für die Teilentleerung (zum Beispiel: durchschnittliches Entleergewicht oder Durchschnittsentleergewicht in Kilogramm pro Zeiteinheit in Sekunde). Für eine Entleerung von Äpfeln ist beispielsweise ein Durchschnittsentleergewicht von 15 kg und eine Zeiteinheit von 1 Sekunde üblich, woraus sich eine Durchschnittsentleergeschwindigkeit von 15 kg pro Sekunde ergibt. Wenn also zum Beispiel das teilzuentleerende Verarbeitungsgewicht auf 60 kg festgelegt ist, so ergibt sich eine Verweildauer von 4 Sekunden, d.h. ein 4-faches Vielfaches der Zeiteinheit von einer Sekunde. Zur Bestimmung der Durchschnittsgeschwindigkeit kann beispielsweise eine aus dem Stand der Technik bekannte Erfassungsvorrichtung eingesetzt werden, die die Zeitspanne misst, welche benötigt wird um eine vollständige Entleerung des Ladehilfsmittels vorzunehmen. Wenn eine Durchschnittsentleergeschwindigkeit bekannt ist, so kann also bestimmt werden, für wie viele Zeiteinheiten das Ladehilfsmittel eingetaucht bleiben muss, um ein bestimmtes Verarbeitungsgewicht (Entleermasse oder Entleergewicht) zu entleeren. Das Durchschnittsentleergewicht für die Gegenstände bezogen auf eine Zeiteinheit kann weiterhin in Abhängigkeit des Füllgewichts (ggfs. wieder durch eine vollständige Entleerung eines größeren oder geringeren Füllgewichts) empirisch ermittelt werden, da ein größeres Füllgewicht zu einem schnelleren Entleeren aufgrund des stärker wirkenden Auftriebs führt. So wäre für die Teilentleerung von Äpfeln beispielsweise eine Durchschnittsentleergeschwindigkeit von 15 Kilogramm pro Sekunde bei einer sehr vollen Kiste und eine Durchschnittsentleergeschwindigkeit von 8 oder 10 Kilogramm pro Sekunde bei einem nur sehr gering gefüllten Kiste vorstellbar. Dabei bilden die 8, 10 und 15 Kilogramm das Durchschnittsentleergewicht und die Sekunde die Zeiteinheit. Die Durchschnittsentleergeschwindigkeit wird nach einer vorbestimmten Anzahl von Durchläufen angepasst, vorzugsweise zwischen 3 bis 10 Durchgängen, vorzugsweise genau nach 5 Durchgängen angepasst.

Um eine noch genauere Bewertung des Durchschnittsentleergewichts vornehmen zu können, hat es sich als bevorzugt erwiesen, wenn ferner die Schritte durchgeführt werden:
I) Ermitteln eines Durchschnittsgewichts für die im Ladehilfsmittel gelagerten Gegenstände und
J) Bestimmung des Durchschnittsentleergewichts ferner in Abhängigkeit des Durchschnittsgewichts.

Das Durchschnittsgewicht für die im Ladehilfsmittel gelagerten Gegenstände kann vor einem Einlagern der Gegenstände ins Ladehilfsmittel gemessen werden. Bei einer Obst, insbesondere einer Apfelsortierung kann dies beispielsweise folgendermaßen erfolgen: Jeder Apfel wird vor dem Einlagern in das Ladehilfsmittel gewogen, womit also dessen Gewicht ermittelt wird. Ferner werden mit Hilfe eines Kamerasystems mehrere Aufnahmen von jedem Apfel gemacht, um dessen Abmessungen, dessen Farbe und dessen Qualität zu bestimmen. Außerdem können dabei gegebenenfalls auch Beschädigungen an den Äpfeln erfasst werden. Die erfassten Äpfel werden anhand der vorstehend genannten Parameter in Klassen eingeteilt. Äpfel, die in der gleichen Klasse eingruppiert wurden, werden üblicherweise in die gleiche Kiste (Ladehilfsmittel) eingelagert. Dabei kann abgezählt werden, wie viele Äpfel in der Kiste eingelagert wurden, welche jeweils ein spezifisch gewogenes Gewicht besitzen. Aus der Vielzahl an Messwerten für das Gewicht der in der Kiste gelagerten Äpfel lässt sich dann das Durchschnittsgewicht errechnen. Es ist dabei auch möglich, dass bei diesem Vorgang bereits das Füllgewicht des jeweiligen Ladehilfsmittels ermittelt wird
- womit also die Reihenfolge der Schritte A) und B) des erfindungsgemäßen Verfahrens nicht zwingend einzuhalten ist. Ergänzend sei angemerkt, dass sich mit dem ermittelten Durchschnittsgewicht außerdem eine präzisere bzw. feinere Einteilung der Verweildauer in Abhängigkeit des Füllgewichts und in Abhängigkeit des teilzuentleerenden Verarbeitungsgewichts bestimmen lässt.

Um eine zuverlässige Teilentleerung des Ladehilfsmittels zusätzlich zu gewährleisten, hat es sich als besonders bevorzugt erwiesen, wenn während des Eintauchens und Positionierens (Schritte C) und D)) das Ladehilfsmittel um einen in Abhängigkeit des Füllgewichts und in Abhängigkeit des Verarbeitungsgewichts vordefinierten Winkel rotiert wird. Dies erleichtert zusätzlich, dass die schwimmfähigen Gegenstände über einen oberen Rand eines Ladehilfsmittels aus der Durchtrittsöffnung austreten können. Außerdem wird durch das Neigen des Ladehilfsmittels in einer Abtransportrichtung gewährleistet, dass keine Gegenstände nach hinten, d.h. entgegen der Abtransportrichtung schwimmen oder entleert werden. Der Winkel kann in einer weiteren vorteilhaften Ausführungsform auch fest oder fix vorgegeben sein derart, so dass keine Abhängigkeit von dem Füllgewicht und/oder dem Verarbeitungsgewicht vorliegt.

Es hat sich ferner als vorteilhaft erwiesen, wenn das Ladehilfsmittel eine stufenlose Rotationsbewegung um den vordefinierten Winkel im Bad durchläuft, da durch diese stufenlose und insbesondere weiche Bewegung keine harten Stöße auf die schwimmfähigen Gegenstände durch das Ladehilfsmittel oder durch andere rotierende Teile ausgeübt werden.

Es ist auch im Rahmen der Erfindung auch möglich, dass die im Mittel konstante Strömung durch eine horizontale Bewegung des Ladehilfsmittels im Bad entgegen einer Entleerrichtung erzeugt wird. Die Entleerrichtung ist die Richtung, in der die teilzuentleerenden Gegenstände abtransportiert werden. Somit kann das Bad auf einfache Weise als eine Wanne oder ein Becken - ohne eine zusätzliche Pumpe - gebildet sein. Die im Mittel konstante Strömung zur Mitnahme der Gegenstände entsteht dann durch die Bewegung des Ladehilfsmittels im Bad entgegen der Entleerrichtung.

Um überprüfen zu können, ob das in Schritt A) festgelegte teilzuentleerende Verarbeitungsgewicht denn auch tatsächlich entleert wurde, hat es sich als bevorzugt erwiesen, wenn das erfindungsgemäße Verfahren ferner den Schritt umfasst:
K) Ermitteln eines tatsächlich entleerten Entleergewichts mittels einer zweiten Wiegung.

Um die Verweildauer für zukünftige Teilentleervorgänge noch genauer zu definieren, ist es von Vorteil, wenn das Verfahren ferner den Schritt umfasst:
L) Neufestlegung der vom Füllgewicht abhängigen Verweildauer für ein dem tatsächlichen entleerten Entleergewicht entsprechenden neuen Verarbeitungsgewicht.

Dadurch ist gewährleistet, dass die Verweildauer zur Entleerung eines dem tatsächlich entleerten Entleergewichts entsprechenden Verarbeitungsgewicht bei einem in Schritt B) festgelegten Füllgewicht sehr exakt ist, wenn eine erneute Teilentleerung mit denselben Parametern erfolgen soll.

Um den Vorgang der Teilentleerung zu beschleunigen und weitgehend automatisiert ablaufen zu lassen, hat es sich ferner als besonders vorteilhaft erwiesen, wenn das Verfahren ferner die Schritte umfasst:
M) Aufnehmen des mit den schwimmfähigen Gegenständen gefüllten Ladehilfsmittels von einem Aufgabepunkt zumindest vor Schritt B), und
N) Abgabe des teilentleerten Ladehilfsmittels an einem Abgabepunkt zumindest nach Schritt E).

Die die Vorrichtung betreffende Aufgabe wird gelöst mit einer Vorrichtung zur Durchführung des Verfahrens mit einem Grundgestell, dem ein in dessen Längsrichtung, d.h. in horizontaler Richtung verfahrbarer Verfahrwagen zugeordnet ist, welcher einen in vertikaler Richtung verstellbaren Hubschlitten mit Mitteln zum Ergreifen eines mit schwimmfähigen Gegenständen befüllten Ladehilfsmittels aufweist, ferner mit mindestens einer Wiegezelle zur Wiegung der vom Hubschlitten ergriffenen Ladehilfsmittel sowie mit einem einen Speicher aufweisenden Steuerrechner zur Steuerung des Verfahrwagens, wobei der Speicher des Steuerrechners eine Datenbank (14) umfasst, in der eine für ein teilzuentleerendes Verarbeitungsgewicht benötigte Verweildauer (15) hinterlegt ist, welche abhängig ist von einem mittels der Wiegezelle (10) ermittelten Füllgewicht (16). Der Steuerrechner zur Steuerung des Verfahrwagens sendet drahtlos und/oder drahtgebunden Signale an die Steuerung des Verfahrwagens und/oder an den Hubschlitten, die dabei eine Hub- bzw. Senkbewegung des Hubschlittens bewirken bzw. zur Folge haben. Mit der Wiegezelle kann das Ladehilfsmittel gewogen werden, wobei das Eigengewicht (Taragewicht) des Ladehilfsmittels durch den Steuerrechner abgezogen wird, um ausgehend von dem Bruttogewicht das Nettogewicht als das tatsächliche Füllgewicht zu ermitteln. Im Speicher wird dieses Füllgewicht abgelegt, in dem auch eine Verweildauer in Abhängigkeit des Füllgewichts und in Abhängigkeit eines beispielsweise über ein Eingabeterminal einzugebenden Verarbeitungsgewichts enthalten ist. Ein Eingabeterminal ist nicht zwingend erforderlich, da auch bereits Parameter von einem Programm übergeben werden können, die das Verarbeitungsgewicht vorgeben; dies erfolgt beispielsweise von einem übergeordneten Verwaltungsrechner, der in einer Kommunikationsverbindung mit dem Steuerrechner steht.

Es hat sich ferner als bevorzugt erwiesen, wenn die Vorrichtung eine Wanne für ein Bad und eine Pumpe in Form einer Zirkulationspumpe zur Erzeugung einer, vorzugsweise im Mittel konstanten Strömung in dem Bad aufweist. Dadurch ist gewährleistet, dass die Zirkulationspumpe durch den Steuerrechner der Vorrichtung gesteuert wird und eine konstante Strömung in dem Bad erzeugt.

Umgekehrt ist es im Rahmen der Erfindung auch möglich, dass eine konstante Verweildauer und eine von dem Verarbeitungsgewicht und dem Füllgewicht der Gegenstände abhängige Strömung erzeugt wird, um ein unterschiedlich schnelles Abtransportieren der aufgetriebenen schwimmfähigen Gegenstände zu realisieren.

Es hat sich weiterhin als besonders vorteilhaft erwiesen, wenn ein Sensor zur Identifizierung eines am Ladehilfsmittel angeordneten Identifikationsmittels vorgesehen ist. In diesem Identifikationsmittel sind beispielsweise die Art der schwimmfähigen Gegenstände, deren Dichte, deren Volumen und damit deren Durchschnittsgewicht hinterlegt. Außerdem kann auch bereits das Füllgewicht im Identifikationsmittel hinterlegt sein. Dieses Identifikationsmittel kann entweder ein Barcode (EAN), ein NFC (Near Field Communication, Nahfeldkommunikation) wie RFID (Radio frequency identification, Identifizierung mit Hilfe elektromagnetischer Wellen) sein. Daher hat es sich auch als besonders vorteilhaft erwiesen, wenn das Identifikationsmittel ein Durchschnittsgewicht der innerhalb des Ladehilfsmittels gelagerten und schwimmfähigen Gegenstände enthält. Dieses Durchschnittsgewicht kann beispielsweise auf der Grundlage der bereits oben beschriebenen Messung des Gewichts jedes einzelnen Gegenstandes und der daran anschließenden Durchschnittsbildung bestimmt werden.

Es ist von Vorteil, wenn der Hubschlitten Mittel zur Rotation des Ladehilfsmittels umfasst. Damit kann das Ladehilfsmittel beim Eintauchvorgang um einen vordefinierten Winkel geschwenkt werden, wodurch verhindert werden kann, dass beispielsweise schwimmfähige Gegenstände in der falschen Richtung in einem Transportkanal transportiert werden. Ein weiterer Vorteil liegt darin, dass der Teilentleervorgang durch die Neigung des Ladehilfsmittels beschleunigt ist.

Um ein weitgehend automatisiertes Verfahren bereitstellen zu können, umfasst die Datenbank eine für ein teilzuentleerendes Verarbeitungsgewicht benötigte Verweildauer, wobei die Verweildauer von dem mittels der mindestens einen Wiegezelle ermittelten Füllgewicht und von dem mittels des Sensors ermittelten Durchschnittsgewichts abhängig ist.

Um ein einfaches Eintauchen bzw. Herausheben des Ladehilfsmittels zu ermöglichen, ist dieses als eine Kiste mit mehreren Durchlässen für den Durchlass von Flüssigkeit gebildet. Diese Durchlässe bringen dem Hubschlitten keinen großen Widerstand entgegen, wenn er die Kiste in das Bad eintaucht.

Teil der Erfindung ist des Weiteren ein Verfahren zur Kalibrierung einer Vorrichtung nach einem der Ansprüche 9 bis 14, wobei dieses die folgenden Schritte umfasst:
- Teilentleeren eines Mindestverarbeitungsgewichts von Gegenständen aus einem annähernd vollständig gefüllten Ladehilfsmittel (9) nach dem Verfahren gemäß Anspruch 6,
- Teilentleeren eines Höchstverarbeitungsgewichts von Gegenständen aus einem annähernd vollständig gefüllten Ladehilfsmittels (9) nach dem Verfahren gemäß Anspruch 6, sowie
- Teilentleeren des Mindestverarbeitungsgewichts von Gegenständen aus einem annähernd leerem Ladehilfsmittels (9) nach dem Verfahren gemäß Anspruch 6.

Das Füllgewicht kann dabei aus einer Summe aus dem zweifachen Mindestverarbeitungsgewicht, dem Höchstverarbeitungsgewicht und dem Restgewicht zusammengesetzt sein und beträgt gemäß einer bevorzugten Ausführungsform zwischen 250 kg und 350 kg, vorzugsweise zwischen 260 kg und 280 kg, weiterhin vorzugsweise genau 270 kg.

Das Mindestverarbeitungsgewicht ist das Gewicht, das bei jedem Teilentleervorgang mindestens entleert werden muss, z.B. ein Gewicht zwischen 1 kg bis 15 kg, vorzugsweise zwischen 8 kg bis 12 kg, vorzugsweise genau 10 kg. Das Höchstverarbeitungsgewicht stellt dementsprechend das Gewicht dar, das maximal teilentleerbar ist, z.B. ein Gewicht zwischen 180 kg und 220 kg, vorzugsweise 200 kg.

Dadurch können drei verschiedene Verweildauern festgelegt werden: Eine Verweildauer bei einem sehr großen Füllgewicht und einem sehr geringen teilzuentleerenden Verarbeitungsgewicht. Ferner eine Verweildauer bei einem großen Füllgewicht und einem ebenfalls großen Verarbeitungsgewicht, sowie eine Verweildauer bei einem geringen Füllgewicht und einem geringen Verarbeitungsgewicht. Dabei ist also möglich mit nur einem einzigen gefüllten Ladehilfsmittel die Vorrichtung derart zu kalibrieren, dass diese schon bei den ersten Teilentleervorgängen zuverlässige Resultate, d.h. gute Übereinstimmungen hinsichtlich des festgelegten Verarbeitungsgewichts und des am Ende tatsächlich entleerten Entleergewichts liefert.

Ebenso ist es möglich drei voneinander unabhängige Ladehilfsmittel für eine Kalibrierung der Vorrichtung einzusetzen, wobei dann ein sehr volles Ladehilfsmittel mit einem dem Mindestverarbeitungsgewicht entsprechenden Verarbeitungsgewicht teilentleert wird; anschließend wird ein ebenso sehr volles weiteres Ladehilfsmittel mit einem dem Höchstverarbeitungsgewicht entsprechenden Verarbeitungsgewicht entleert. Danach wird ein nahezu leeres, ggfs. drittes Ladehilfsmittel teilentleert mit einem dem Mindestverarbeitungsgewicht entsprechenden Verarbeitungsgewicht. Auch durch dieses Verfahren lässt sich eine Kalibrierung der Vorrichtung erreichen.

Durch die Festlegung dieser drei Verweildauern können Verweildauern für dazwischenliegende Füllgewichte bzw. Verarbeitungsgewichte rechnerisch extrapoliert werden. Eine noch genauere Definition der Verweildauern erfolgt dann bei einem Verfahren, das eine Neudefinition der Verweildauer nach Abschluss einer zweiten Wiegung vorsieht.

Im folgenden wird die Erfindung an in der Zeichnung dargestellten Ausführungsbeispielen näher erläutert; es zeigen:
- Fig. 1: eine Vorrichtung zur Durchführung des Verfahrens, perspektivisch gezeigt;
- Fig. 2: eine Seitenansicht der Vorrichtung nach Fig. 1,
- Fig. 3: ein Ablaufdiagramm des erfindungsgemäßen Verfahrens,
- Fig. 4: einen Tabelleninhalt der Datenbank des Steuerrechners, und
- Fig. 5: eine Übersicht über die Datenbank des Steuerrechners

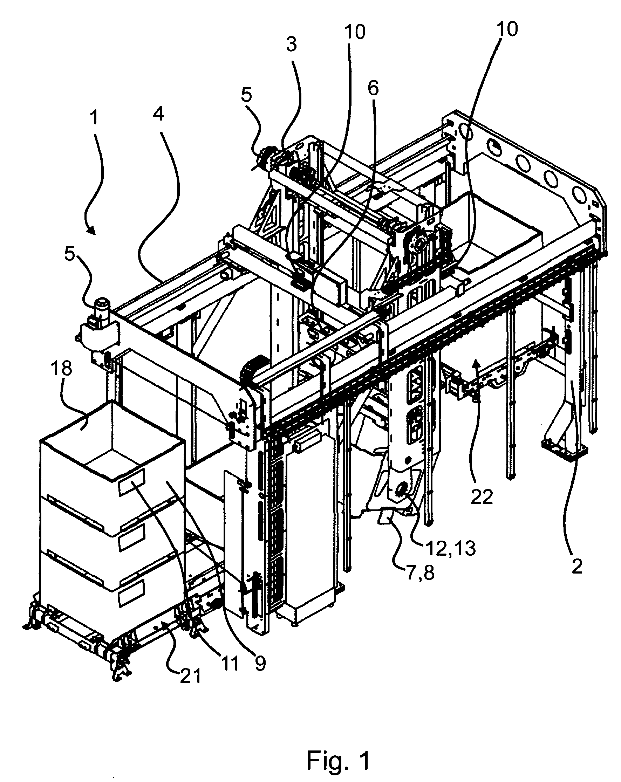

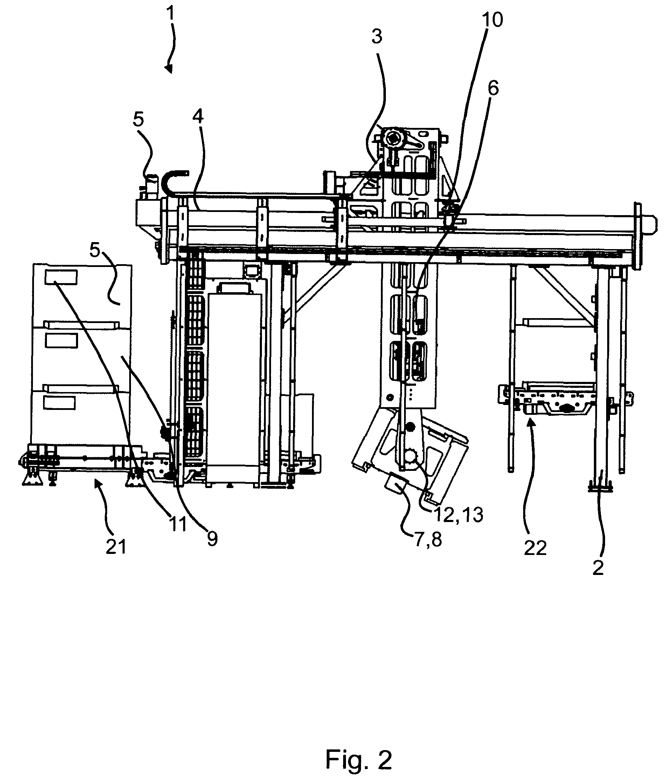

In Fig. 1 und 2 ist eine Entleerstation 1 zur Entleerung von schwimmfähigen Gegenständen; hier von schwimmfähigem Obst, wie beispielsweise Äpfeln gezeigt. Diese Entleerstation 1 ist eine Vorrichtung zur Durchführung des erfindungsgemäßen Verfahrens.

Sie besitzt ein Grundgestell 2 und einen daran angeordneten in dessen Längsrichtung verfahrbaren Verfahrwagen 3. Der Verfahrwagen 3 ist oben am Grundgestell 2 angeordnet und entlang Längsführungen 4 geführt.

Ebenso ist es möglich, dass ein Schienensystem am Boden angeordnet ist, wobei der Verfahrwagen 3 dann entlang diesem verstellt werden kann. Um den Verfahrwagen 3 in einer Längsrichtung verstellen zu können, sind Motoren 5, vorliegend Elektromotoren vorgesehen.

Der Hubschlitten 6 besitzt Mittel 7 zum Ergreifen eines mit schwimmfähigen Gegenständen befüllten Ladehilfsmittels 9. Bei der Entleerstation 1 nach der gezeigten Ausführungsform ist ein Greifwerk mit einem Greifer 8 vorgesehen, der geöffnet und geschlossen werden kann, um die als Kisten gebildete Ladehilfsmittel 9 zu ergreifen. Dem mit dem Steuerrechner in einer Kommunikationsverbindung stehende Greifer 8 ist zusätzlich ein Mittel 12 für eine Rotationsbewegung zugeordnet. Dieses Drehwerk 13 besitzt einen Drehgeber, der eine Signalverbindung mit dem Steuerrechner aufweist. Gleichfalls besteht eine Signalverbindung zwischen dem Steuerrechner und dem Verfahrwagen 3 bzw. mit dessen Hubschlitten 6. Die Entleerstation 1 besitzt ferner drei Wiegezellen 10, die das ergriffene Ladehilfsmittel 9 wiegen können, wobei mit Hilfe des Steuerrechners das exakte Füllgewicht 16 der im Ladehilfsmittel 9 gelagerten Gegenstände ermittelt wird. Die Wiegezellen 10 oder die Waage ist dem Verfahrwagen 3, vorzugsweise dem Hubschlitten 6 bzw. dem Greifer 8 zugeordnet.

Am Verfahrwagen 3 - oder gemäß einer weiteren bevorzugten Ausführungsform am Grundgestell 2 - ist ein Sensor zur Identifizierung von am Ladehilfsmittel 9 angeordneten Identifikationsmitteln 11 vorgesehen. Der verwendete Sensor ist ein Scanner (z.B. Barcode-Scanner oder RFID-Scanner), welcher das Identifikationsmittel 11 scannt bzw. abtastet und dabei Daten hinsichtlich der im Ladehilfsmittel 9 gelagerten Gegenstände ermittelt.

Ferner umfasst die Entleerstation 1 einen Aufgabepunkt 21, an dem ein Stapel an Ladehilfsmitteln 9, vorliegend ein Stapel an Kisten, aufgegeben werden kann. Beim gezeigten Ausführungsbeispiel sind genau drei Kisten aufeinander gestapelt. Die Höhe des aufgebbaren Kistenstapels hängt von der maximal möglichen Hubhöhe des Hubschlittens 6 bzw. von der Höhe des Grundgestells 2 ab. Es ist daher im Rahmen der Erfindung auch ein Aufgabepunkt 21 vorgesehen, der die Stapelung einer anderen Anzahl an Kisten, beispielsweise zwei oder auch vier oder mehr Kisten vorsieht. Gemäß einer weiteren Ausführungsform der Vorrichtung ist dem Aufgabepunkt 21 mindestens ein Lichttaster/Lichtschranke zugeordnet, der derart ausgelegt ist, dass er die Anzahl der auf dem Aufgabepunkt 21 befindlichen Ladehilfsmittel 9 erfassen kann. Es kann auch pro Kiste je ein Lichttaster oder Lichtschranke eingesetzt werden. Die Abmessungen des Ladehilfsmittel sind beispielsweise durch eine Norm vorgegeben, woraus sich die Eintauchtiefe für den Hubschlitten 6 bereits aus den in der Norm bereitgestellten Werten ermitteln lässt. Dem Aufgabepunkt 21 ist gemäß einer anderen Ausführungsform der Erfindung ein Ladehilfsmittelscanner zugeordnet, der die Anzahl der auf dem Aufgabepunkt 21 gestapelten Kisten ermittelt und an den Steuerrechner meldet. Um die Entleerstation 1 vor Beschädigungen durch einen Gabelstapler beim Beladen des Aufgabepunktes 21 zu schützen, ist gemäß einer weiteren bevorzugten Ausführungsform der Vorrichtung ein Rammschutz vorgesehen.

Ferner umfasst die Entleerstation 1 einen Abgabepunkt 22, an dem die teilentleerten bzw. vollständig entleerten Kisten vom Greifer 8 des Hubschlittens 6 abgelegt werden und von dort aus abtransportiert werden. Auch hier ist es möglich, die (teil-)entleerten Kisten zu stapeln.

Die Entleerstation 1 umfasst gemäß einer weiteren Ausführungsform Höhenerkennungsmittel, beispielsweise in Form von Lichtschranken, die die Höhe der Kistenstapel oder auch die Abmessung der Kiste erfassen können, um zu große bzw. zu kleine Kisten aus der Entleerstation 1 auszusondern oder um eine entsprechende Eintauchtiefe des Ladehilfsmittels 9 in das Bad mittels des Hubschlittens 6 errechnen zu können.

Der Aufgabepunkt 21 und/oder der Abgabepunkt 22 verfügen im gezeigten Ausführungsbeispiel über Fördermittel, beispielsweise über Förderbänder oder Förderketten, durch die die Kisten zu- bzw. abtransportiert werden können. Diese Fördermittel sind vorzugsweise aus einem nicht-rostenden Material, wie einem Edelstahl gefertigt.

Ferner kann bei der Entleerstation 1 ein Lichtvorhang vorgesehen sein, der aus einer Mehrzahl von Lichtschranken realisiert ist und der eine Unterbrechung jeder einzelnen Lichtschranke detektieren kann. Dieser Lichtvorhang stellt eine Sicherheitseinrichtung dar, um Personen zu schützen, die in den Bereich des Verfahrweges des Verfahrwagens bzw. des Hubschlittens gelangen. Bei einer Unterbrechung der Lichtschranke wird dabei ein Notstopp der Entleerstation 1 ausgelöst. Eine weitere Ausführungsform kommt ohne einen Lichtvorhang aus. Diese weist dann beispielsweise konventionelle Gitter zur Absicherung von Personen auf. Über mindestens eine Zugangstür ist dann der Zugang zum Verfahrbereich des Verfahrwagens 3 und des Hubschlittens 6 ermöglicht. Dies wird immer dann notwendig, wenn Wartungs- oder Servicearbeiten an der Entleerstation 1 durchzuführen sind.

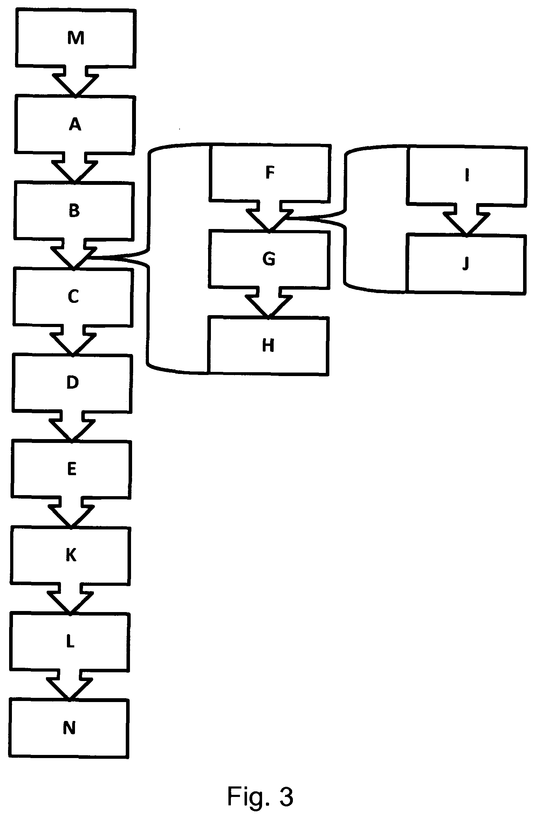

Nachfolgend sollen anhand der Figuren 3 bis 5 das erfindungsgemäße Verfahren sowie das erfindungsgemäße Verfahren zur Kalibrierung einer Entleerstation 1 nach den Figuren 1 und 2 erläutert werden. Das Verfahren wird anhand des in Figur 3 links angeordneten Ablaufdiagramms erklärt.

Gemäß der bevorzugten Ausführungsform des Verfahrens nimmt der Greifer 8 des Hubschlittens 6 die mit den schwimmfähigen Gegenständen gefüllte Kiste vom Aufgabepunkt 21 auf (Schritt M). Hierzu wird der Verfahrwagen 3 in eine Aufgabeendstellung auf der Seite des Aufgabepunktes verstellt. Durch ein Eingabeterminal bzw. durch die Parameterübergabe eines übergeordneten Verwaltungsrechners wird oder wurde bereits ein teilzuentleerendes Verarbeitungsgewicht 19 bzw. das zu entleerende Gewicht festgelegt (Schritt A)).

Mit dem Sensor zur Identifizierung des an der Kiste angeordneten Barcodes wird ermittelt, welches Durchschnittsgewicht 17 ein einzelner Gegenstand in der Kiste besitzt (Schritt I)). Daraus lässt sich das Durchschnittsentleergewicht 20 bezogen auf eine Zeiteinheit (Durchschnittsentleergeschwindigkeit) ermitteln (Schritt F)). Durch Vergleichen des Verarbeitungsgewichts 19 mit der Zeitdauer ergibt sich die Verweildauer 15 wie unten näher erläutert ist. Mit einer ersten Wiegung mittels der Wiegezelle 10 wird das Füllgewicht 16 der Gegenstände im Ladehilfsmittel 9 ermittelt (Schritt B)). Im gezeigten Ausführungsbeispiel sind mehrere Wiegezellen 10 vorgesehen. Vorzugsweise sind genau drei Wiegezellen 10 vorgesehen. Davon sind zwei der Wiegezellen 10 seitlich am Verfahrwagen 3 oder auch am Hubschlitten 9 angeordet und eine der Wiegezellen 10 zentral oder mittig.

Dann wird der Verfahrwagen 3 in eine Entleerstellung verstellt, die sich zwischen der Aufgabeendstellung und einer Abgabeendstellung auf der Seite des Abgabepunktes befindet. Die Kiste wird anschließend gemäß einer bevorzugten Ausführungsform in ein Wasserbad eingetaucht (Schritt C)), wozu der Steuerrechner bzw. eine Steuerung ein Senksignal übersendet, das in einer Senkbewegung des Hubschlittens 6 resultiert. Das Bad befindet sich in einer (nicht näher gezeigten) Wanne mit einem daran angeschlossenen Transportkanal für den Abtransport der entleerten Gegenstände. Eine mit dem Steuerrechner in Kommunikationsverbindung stehende Pumpe (bspw. eine Zirkulationspumpe) erzeugt eine konstante Strömung in dem Bad.

Die Kiste wird beim Senkvorgang derart im Bad positioniert, dass die in der Kiste gelagerten Gegenstände an die Oberfläche auftauchen und von der Strömung im Bad abtransportiert werden. Dabei wird die Kiste im Bad für eine vordefinierte Verweildauer 15 gehalten (Schritt D)).

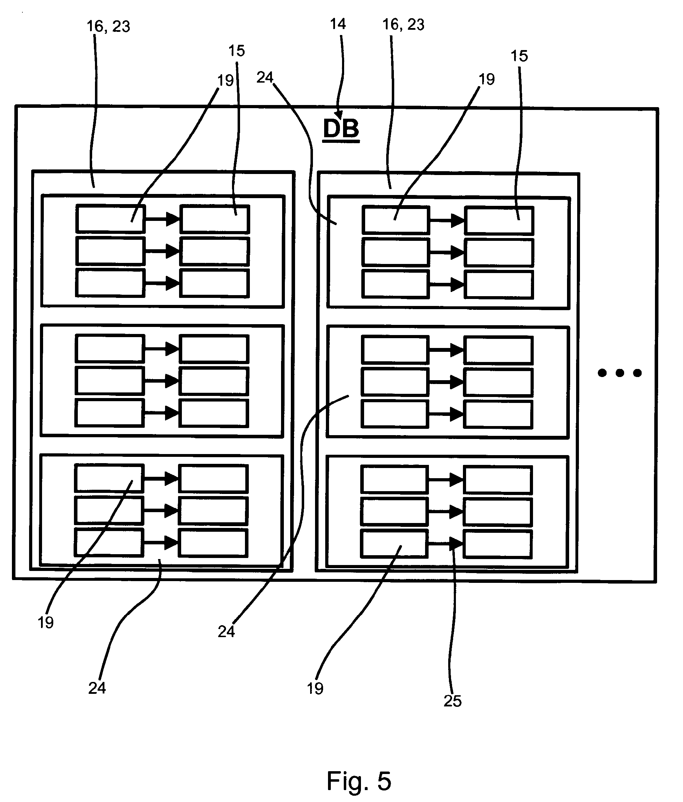

Diese Verweildauer 15 hängt ab vom Füllgewicht 16, sowie von dem eingangs festgelegten teilzuentleerenden Verarbeitungsgewicht 19. Im Speicher des Steuerrechners ist eine Datenbank 14 hinterlegt, die schematisch in Fig. 5 wiedergegeben ist. In dieser Datenbank 14 sind Tabellen hinterlegt, die verschiedene Verweildauern 15 enthalten. Hierbei sind im gezeigten Ausführungsbeispiel zwei verschiedene Füllgewichtstabellen 23 hinterlegt, die jeweils für ein bestimmtes Füllgewicht 16, bzw. für einen bestimmten Bereich des Füllgewichts 16 die Verweildauer 15 in Abhängigkeit eines bestimmten Verarbeitungsgewicht 19, bzw. für einen bestimmten Bereich des Verarbeitungsgewichts 19 enthalten. Es ist im Rahmen des Verfahrens auch vorgesehen, dass das Füllgewicht 16 auf- bzw. abgerundet wird auf einen vorhandenen nahegelegenen Datenpunkt.

Nur beispielhaft sei an dieser Stelle angemerkt, dass es sich für die Teilentleerung von Äpfeln als sinnvoll erwiesen hat, das Füllgewicht 16 in drei Bereiche umfassend das Füllgewicht 16 von 0kg bis 200kg, das Füllgewicht von 200kg bis 300kg und das Füllgewicht 16 von 300kg bis 400kg, einzuteilen.

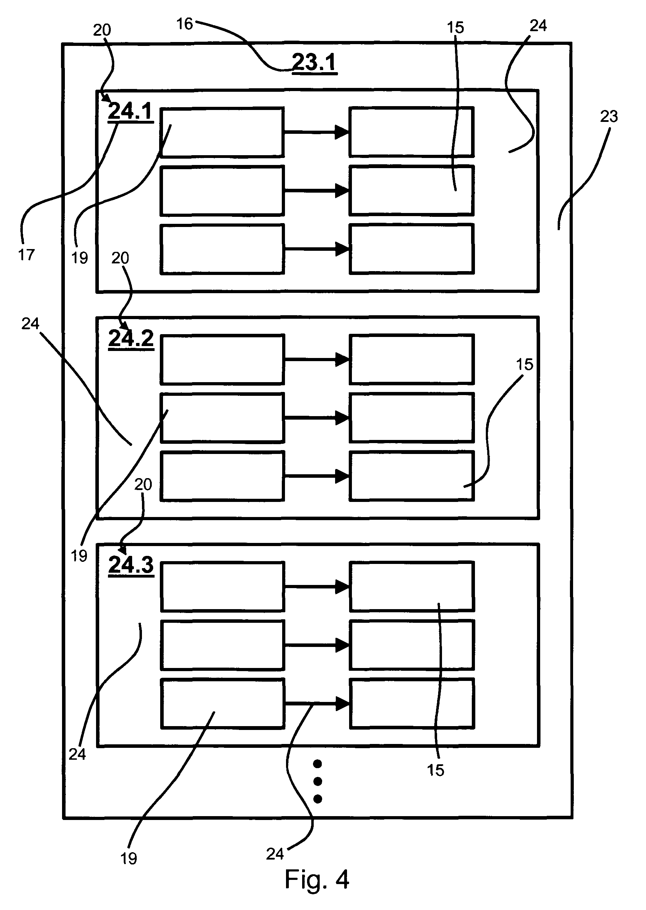

Für jeden Füllgewichtsbereich sind weitere, im vorliegenden Beispiel nach Fig. 4 und Fig. 5 drei Durchschnittsgewichtstabellen 24 (24.1; 24.2; 24.3) hinterlegt, die das Durchschnittsgewicht 17, bzw. Bereiche des Durchschnittsgewichts 17 der im Ladehilfsmittel 9 enthaltenen Gegenstände darstellen. Diese wurden vorab gemessen und mittels des Sensors ermittelt. Es ist natürlich auch möglich, dass weniger oder mehr als 3 Tabellen für das Durchschnittsgewicht 17 der Gegenstände vorhanden sind. Auch hier ist es im Rahmen des Verfahrens vorgesehen, dass das Durchschnittsgewicht 17 auf- bzw. abgerundet wird auf einen vorhandenen nahegelegenen Datenpunkt.

Nur beispielhaft sei an dieser Stelle angemerkt, dass es sich für die Teilentleerung von Äpfeln als sinnvoll erwiesen hat, das Durchschnittsgewicht 17 in 25g-Bereiche bei 100g beginnend und bei 400g endend einzuteilen.

Zu jeder Durchschnittsgewichtstabelle 24 existieren mehrere Verarbeitungsgewichte 19, die auf eine entsprechende Verweildauer 15 schließen lassen, wie durch einen Pfeil 25 angedeutet ist. Durch Ermittlung der Eingangsparameter oder Werte (Füllgewicht 16, Durchschnittsgewicht 17, Verarbeitungsgewicht 19) in der Datenbank 14 wird mit anderen Worten also ein Wert für die Verweildauer 15 des Ladehilfsmittels 9 im Bad geliefert. Ferner kann gleichzeitig auch eine erfindungsgemäße Rotationsbewegung um den vordefinierten Winkel der Kiste erfolgen - ebenfalls in Abhängigkeit der vorstehend genannten Eingangsparameter. Die Kisten werden damit in einer fließenden Drehbewegung in das Bad teilentleert. Dabei kann der Winkel fix oder fest vorgegeben sein - auch unabhängig vom Füllgrad der Kiste oder des Verarbeitungsgewichts 19.

Ist die in der Datenbank 14 enthaltene Verweildauer 15 abgelaufen, so sendet der Steuerrechner ein Hubsignal, das in einer Hubbewegung des Hubschlittens 6 resultiert. Dieser hebt also nach Ablauf der Verweildauer 15 das Ladehilfsmittel 9 aus dem Bad heraus (Schritt E)).

Anschließend wird eine weitere, zweite Wiegung des Ladehilfsmittels 9 durchgeführt, um ein tatsächlich entleertes Entleergewicht zu ermitteln (Schritt K)). In der Datenbank 14 wird nun der Wert der Verweildauer 15 überschrieben oder ein neuer Wert angelegt, der abhängig ist von dem ermittelten Füllgewicht 16, von dem ermittelten Durchschnittsgewicht 17 und dem tatsächlich entleerten Entleergewicht. Dieses Entleergewicht steht in einem späteren Teilentleervorgang als Verarbeitungsgewicht 19 in der Datenbank 14 mit einer sehr präzisen Verweildauer 15 zur Verfügung. Somit kann später bei den gleichen Parametern ein besseres Ergebnis für die Teilentleerung erzielt werden (Schritt L)). Abschließend wird das zumindest teilentleerte Ladehilfsmittel 9 vom Hubschlitten 6 und vom Verfahrwagen 3 an den Abgabepunkt 22 übergeben (Schritt N)). Hierzu wird der Verfahrwagen 3 in die Abgabeendstellung verstellt und die Kiste durch eine Senkbewegung des Hubschlittens 6, sowie eine den Greifer 8 öffnende Bewegung auf dem Abgabepunkt 22 abgelegt.

Nachstehend soll als Teil der Erfindung ein Kalibrierverfahren für eine Vorrichtung zur Durchführung des Verfahrens erläutert werden, welches gemäß einer bevorzugten Ausführungsform als ein computerimplementiertes Verfahren ausgeführt ist. Dieses kann ohne die o.g. Durchschnittsgeschwindigkeit auskommen. Dieses Verfahren kann sich auch dem in Anspruch 15 erläuterten Verfahren anschließen.

Zur Durchführung des Verfahrens umfasst die Vorrichtung einen Steuerrechner, der über einen Speicher mit einer Datenbank 14 verfügt, die ihrerseits Datenbanktabellen, nämlich Füllgewichtstabellen 23 enthält. Jede der Füllgewichtstabellen 23 enthält Durchschnittsgewichtstabellen 24 für das Durchschnittsgewicht 17 der im Ladehilfsmittel 9 enthaltenen Gegenstände. Die Durchschnittsgewichtstabellen 24 enthalten ihrerseits Tabellen mit Verarbeitungsgewichten 19. Den teilzuentleerenden Verarbeitungsgewichten 19 wird beim Kalibrierverfahren eine Verweildauer 15 zugeordnet.

Zunächst wird ein Ladehilfsmittel 9 in einer ersten Wiegung gewogen, womit dessen Füllgewicht 16 ermittelt wird. Dann wird für eine bestimmte Zeitdauer der Inhalt des Ladehilfsmittels 9 in ein Bad entleert. Anschließend wird durch eine zweite Wiegung ermittelt, wie viel tatsächlich entleert wurde. Danach wird ein entsprechender Eintrag in der Datenbank 14 vorgenommen. Die Zeitdauer ist nun diejenige Verweildauer 15, die benötigt wird, um das tatsächlich entleerte Entleergewicht bei einem zuvor ermittelten Füllgewicht 16 zu entleeren. Ausgehend von der ersten Zeitdauer kann nun errechnet werden (linear extrapoliert), wie lange die Verweildauer für ein Verarbeitungsgewicht 19 beträgt, wenn dieses ein Vielfaches des tatsächlich entleerten Gewichts des ersten Entleervorganges darstellt.

Wird zu einem späteren Zeitpunkt ein Verarbeitungsgewicht 19 teilentleert, das ein Vielfaches (beispielsweise das 1,1-fache) des tatsächlich entleerten Entleergewichts beträgt, so wird die Verweildauer 15 folgendermaßen berechnet: Bestimmung einer Abweichung des teilzuentleerenden Verarbeitsungsgewichts 15 gegenüber dem vorherigen tatsächlich entleerten Entleergewichts. Anwendung der Durchschnittsentleergeschwindigkeit auf diese Abweichung, um eine Abweichungszeitdauer zu ermitteln. Die Verweildauer setzt sich zusammen aus der zuvor bekannten Verweildauer des tatsächlich entleerten Entleergewichts und der Abweichungszeitdauer (z. B. 60 kg tatsächliches Entleergewicht entspricht 3 Sekunden Verweildauer; nun zu entleeren: 40 kg; Berechnung der Abweichung: 60 kg - 40 kg = 20 kg; Berechnung der Abweichungszeitdauer: 20 kg /15 kg/s = 1,33 s; Berechnung der Verweildauer für Teilentleerung von 40 kg : 3 s - 1,33 s = 1,667 s). Wird bei der zweiten Wiegung dann festgestellt, dass die Abweichung zwischen dem gewünschten Verarbeitungsgewicht 19 und dem tatsächlich entleerten Entleergewicht einen vordefinierten Wert überschreitet, so wird der zuvor gewählte Wert für die Verweildauer 15 verworfen, d.h. nicht gespeichert. Andererseits wird wiederum die Verweildauer 15 (das Vielfache der Zeitdauer) für das tatsächlich entleerte Entleergewicht festgelegt. Wird der vordefinierte Wert nicht überschritten, so wird die vorherige Verweildauer 15 gespeichert für das Vielfache des Verarbeitungsgewichts 19. Durch mehrere Teilentleervorgänge füllt sich damit nach und nach die Datenbank mit Werten. Die Datenbank umfasst dann Werte für das Verarbeitungsgewicht 19, z.B. in vordefinierten Schritten untergliedert, vorzugsweise in 10kg-Schritten. Die Verweildauer 15 für Zwischenwerte zwischen den einzelnen Schritten wird wiederum errechnet (linear).

Sollte es nun zu dem Fall kommen, dass eine Füllgewichtstabelle 24 mit einem niedrigen Füllgewicht 16 bereits sehr voll an Werten für die Verweildauer 15 ist, eine andere Füllgewichtstabelle 24 mit einem sehr hohen Füllgewicht 16 jedoch noch relativ leer ist, so kann ein (nahezu) volles Ladehilfsmittel 9 teilentleert werden, um Werte für Verweildauern 15 zu ermitteln, die bezüglich hohen Füllgewichten 16 benötigt werden. Dieses Ladehilfsmittel 9 kann dann auch in mehreren Schritten teilentleert werden. Entsprechendes gilt auch umgekehrt, wenn Werte für ein niedriges (oder auch mittleres) Füllgewicht 16 fehlen.

Bei mehreren (vielen) Entleervorgängen kann damit ein zunehmend genaueres Entleerergebnis erzielt werden. Damit ist ein lernender, iterativer Teilentleervorgang geschaffen, der eine immer noch genauere Verweildauer 15 in Abhängigkeit der Eingangsparameter bietet.

### Bezugszeichenliste

- 1: Entleerstation
- 2: Grundgestell
- 3: Verfahrwagen
- 4: Längsführung
- 5: Motor
- 6: Hubschlitten
- 7: Mittel zum Ergreifen
- 8: Greifer
- 9: Ladehilfsmittel
- 10: Wiegezelle
- 11: Identifikationsmittel
- 12: Mittel zur Rotation
- 13: Drehwerk
- 14: Datenbank
- 15: Verweildauer
- 16: Füllgewicht
- 17: Durchschnittsgewicht
- 18: Durchtrittsöffnung
- 19: Verarbeitungsgewicht
- 20: Durchschnittsentleergewicht
- 21: Aufgabepunkt
- 22: Abgabepunkt
- 23: Füllgewichtstabelle
- 24: Durchschnittsgewichtstabelle
- 25: Pfeil

## Patentansprüche

1. Verfahren zur Teilentleerung von schwimmfähigen Gegenständen, die in einem zumindest eine Durchtrittsöffnung (18) aufweisenden Ladehilfsmittel (9) gelagert sind, umfassend die Schritte:
A) Festlegung eines teilzuentleerenden Verarbeitungsgewichts (19),
B) Ermitteln eines Füllgewichts (16) der Gegenstände im Ladehilfsmittel (9) mittels einer ersten Wiegung,
C) zumindest teilweises Eintauchen des Ladehilfsmittels (9) in ein flüssiges Bad,
D) Positionieren oder Bewegen des Ladehilfsmittels (9) für eine in Abhängigkeit des Füllgewichts (16) und des Verarbeitungsgewichts (19) vordefinierte Verweildauer (15) im Bad derart, dass eine im Mittel konstante Strömung gegenüber dem Ladehilfsmittel (9) vorliegt, und dass die Durchtrittsöffnung (18) zumindest teilweise unterhalb einer Füllstandsoberfläche des Bades angeordnet ist, wobei die Gegenstände von der Strömung mitgenommen werden, sowie
E) Herausheben des zumindest teilweise entleerten Ladehilfsmittels (9) aus dem Bad nach Ablauf der Verweildauer (15).

2. Verfahren nach Anspruch 1, wobei die Verweildauer (15) zumindest vor dem Schritt C) festgelegt wird durch die Schritte:
F) Ermitteln eines Durchschnittsentleergewichts (20) für die Gegenstände bezogen auf eine Zeiteinheit in Abhängigkeit des Füllgewichts (16),
G) Vergleichen des Durchschnittsentleergewichts (20) mit dem Verarbeitungsgewicht (19), und
H) Bestimmen eines der Verweildauer (9) entsprechenden Vielfaches der Zeiteinheit.

3. Verfahren nach Anspruch 2, wobei dieses ferner die Schritte umfasst:
I) Ermitteln eines Durchschnittsgewichts (17) für die im Ladehilfsmittel (9) gelagerten Gegenstände, und
J) Bestimmung des Durchschnittsentleergewichts (20) ferner in Abhängigkeit des Durchschnittsgewichts (17).

4. Verfahren nach einem der Ansprüche 1 bis 3, wobei das Ladehilfsmittels (9) während Schritt D) um einen in Abhängigkeit des Füllgewichts (16) und in Abhängigkeit des Verarbeitungsgewichts (19) vordefinierten Winkels rotiert wird.

5. Verfahren nach einem der Ansprüche 1 bis 4, wobei die im Mittel konstante Strömung durch eine horizontale Bewegung des Ladehilfsmittels (9) im Bad entgegen einer Entleerrichtung erzeugt wird.

6. Verfahren nach einem der Ansprüche 1 bis 5, wobei dieses ferner den Schritt umfasst:
K) Ermitteln eines tatsächlich entleerten Entleergewichts mittels einer zweiten Wiegung.

7. Verfahren nach Anspruch 6, wobei dieses ferner den Schritt umfasst:
L) Neufestlegung der vom Füllgewicht (16) abhängigen Verweildauer (15) für ein dem tatsächlich entleerten Entleergewicht entsprechendes neues Verarbeitungsgewicht.

8. Verfahren nach einem der Ansprüche 1 bis 7, wobei dieses ferner die Schritte umfasst:
M) Aufnehmen des mit den schwimmfähigen Gegenständen gefüllten Ladehilfsmittels (9) von einem Aufgabepunkt (21) zumindest vor Schritt B), und
N) Abgeben des zumindest teilentleerten Ladehilfsmittels (9) an einen Abgabepunkt (22) zumindest nach Schritt E).

9. Vorrichtung zur Durchführung des Verfahrens nach einem der Ansprüche 1 bis 8, mit einem Grundgestell (2) dem ein in dessen Längsrichtung verfahrbarer Verfahrwagen (3) zugeordnet ist, welcher einen in vertikaler Richtung verstellbaren Hubschlitten (6) mit Mitteln (7; 8) zum Ergreifen eines mit schwimmfähigen Gegenständen befüllten Ladehilfsmittels (9) aufweist, ferner mit mindestens einer Wiegezelle (10) zur Wiegung der vom Hubschlitten (6) ergriffenen Ladehilfsmittel (9), sowie mit einem einen Speicher aufweisenden Steuerrechner zur Steuerung des Verfahrwagens (3), wobei der Speicher des Steuerrechners eine Datenbank (14) umfasst, in der eine für ein teilzuentleerendes Verarbeitungsgewicht benötigte Verweildauer (15) hinterlegt ist, welche abhängig ist von einem mittels der Wiegezelle (10) ermittelten Füllgewicht (16).

10. Vorrichtung nach Anspruch 9, ferner mit einer Wanne für ein Bad und mit einer Zirkulationspumpe zur Erzeugung einer Strömung in dem Bad.

11. Vorrichtung nach Anspruch 9 oder 10, wobei ein Sensor (8) zur Identifizierung eines am Ladehilfsmittel (9) angeordneten Identifikationsmittels (10) vorgesehen ist.

12. Vorrichtung nach Anspruch 11, wobei das Identifikationsmittel (10) ein Durchschnittsgewicht (17) der innerhalb des Ladehilfsmittels (9) gelagerten und schwimmfähigen Gegenstände enthält.

13. Vorrichtung nach einem der Ansprüche 9 bis 12, wobei der Hubschlitten (6) Mittel (12; 13) zur Rotation des Ladehilfsmittels (9) umfasst.

14. Vorrichtung nach Anspruch 12 oder 13, wobei die in der Datenbank (14) des Speichers hinterlegte Verweildauer (15) von dem mittels des Sensors ermittelten Durchschnittsgewicht (17) abhängig ist.

15. Verfahren zur Kalibrierung einer Vorrichtung nach einem der Ansprüche 9 bis 14, wobei dieses die folgenden Schritte umfasst:
- Teilentleeren eines Mindestverarbeitungsgewichts von Gegenständen aus einem annähernd vollständig gefüllten Ladehilfsmittel (9) nach dem Verfahren gemäß Anspruch 6,
- Teilentleeren eines Höchstverarbeitungsgewichts von Gegenständen aus einem annähernd vollständig gefüllten Ladehilfsmittels (9) nach dem Verfahren gemäß Anspruch 6, sowie
- Teilentleeren des Mindestverarbeitungsgewichts von Gegenständen aus einem annähernd leerem Ladehilfsmittels (9) nach dem Verfahren gemäß Anspruch 6.

## Claims

1. Method for part emptying buoyant objects stored in a loading aid (9) comprising at least one through opening (18), including the steps:
A) determining a part-emptyable processing weight (19),
B) calculating a filling weight (16) of the objects in the loading aid (9) by means of a first weighing,
C) at least partial submersion of the loading aid (9) in a liquid bath,
D) positioning or moving the loading aid (9) for a pre-defined retention period (15) in the bath dependent on the filling weight (16) and the processing weight (19) in such a way that an on average constant stream in relation to the loading aid (9) exists, and in that the through opening (18) is arranged at least in part below a filling level surface of the bath, whereby the objects are carried along by the stream, as well as
E) lifting the at least partially emptied loading aid (9) from the bath following expiry of the retention period (15).

2. Method according to claim 1, whereby the retention period (15) is determined at least prior to step C) by the steps:
F) calculating an average empty weight (20) for the objects related to a time unit in dependence on the filling weight (16),
G) comparing the average empty weight (20) with the processing weight (19), and
H) determining a multitude of the time unit equalling the retention time (9).

3. Method according to claim 2, whereby this further includes the steps:
I) calculating an average weight (17) for the objects stored in the loading aid (9), and
J) determining the average empty weight (20), also in dependence on the average weight (17).

4. Method according to one of the claims 1 to 3, whereby the loading aid (9) is rotated around an angle pre-defined depending on the filling weight (16) and in dependence on the processing weight (19) during step D).

5. Method according to one of the claims 1 to 4, whereby the on average constant stream is generated by a horizontal movement of the loading aid (9) in the bath against an emptying direction.

6. Method according to one of the claims 1 to 5, whereby this further includes the step:
K) calculating an actual emptied emptying weight by means of a second weighing.

7. Method according to claim 6, whereby this further includes the step:
L) newly determining the retention period (15) dependent on the filling weight (16) for the new processing weight equalling the actual emptied emptying weight.

8. Method according to one of the claims 1 to 7, whereby this further includes the steps:
M) lifting the loading aid (9) filled with the buoyant objects from a collection point (21) at least prior to step B), and
N) delivering the at least partly emptied loading aid (9) to a delivery point (22) at least after step E).

9. Device for carrying out the method according to one of the claims 1 to 8, with a base frame (2), with which a displacement carriage (3) displaceable in its longitudinal direction is associated, which comprises a lifting slide (6) adjustable in a vertical direction with means (7; 8) for taking up a loading aid (9) filled with buoyant objects, further with at least one weighing cell (10) for weighing the loading aids (9) taken up by the lifting slide (6), and with a control computer comprising a memory for controlling the displacement carriage (3), whereby the memory of the control computer comprises a databank (14) in which a retention period (15) required for a processing weight to be partially emptied is stored, which depends one a filling weight (16) calculated by means of the weighing cell (10).

10. Device according to claim 9, further with a vat for a bath and with a circulation pump for generating a stream in the bath.

11. Device according to claim 9 or 10, whereby a sensor (8) for identifying an identification means (10) on the loading aid (9) is envisaged.

12. Device according to claim 11, whereby the identification means (10) contains an average weight (17) for the buoyant objects stored in the loading aid (9).

13. Device according to one of the claims 9 to 12, whereby the lifting carriage (6) comprises means (12; 13) for rotating the loading aid (9).

14. Device according to claim 12 or 13, whereby the retention period (15) stored in the databank (14) of the memory depends on the average weight (17) calculated by means of the sensor.

15. Method for calibrating a device according to one of the claims 9 to 14, whereby this includes the following steps:
- part emptying a minimum processing weight from objects from an almost completely filled loading aid (9) according to the method according to claim 6,
- part emptying a maximum processing weight from objects from an almost completely filled loading aid (9) according to the method according to claim 6, and
- part emptying the minimum processing weight from objects from an almost empty loading aid (9) according to the method according to claim 6.

## Revendications

1. Procédé de vidange partiel d'objets pouvant flotter, qui sont stockés dans un moyen auxiliaire de chargement (9) présentant au moins une ouverture de passage (18), comprenant les étapes suivantes :
A) définition d'un poids de traitement (19) devant faire l'objet d'un vidange partiel,
B) détermination d'un poids de remplissage (16) des objets dans le moyen auxiliaire de chargement (9), à l'aide d'un premier pesage,
C) immersion au moins partielle du moyen auxiliaire de chargement (9) dans un bain liquide,
D) positionnement ou déplacement du moyen auxiliaire de chargement (9) pendant un temps de séjour (15) dans le bain, prédéfini en fonction du poids de remplissage (16) et du poids de traitement (19), de telle sorte qu'il existe un courant en moyenne constant par rapport au moyen auxiliaire de chargement (9), et que l'ouverture de passage (18) soit disposée au moins en partie au dessous d'une surface de niveau de remplissage du bain, les objets étant entraînés par le courant, ainsi que
E) levage du moyen auxiliaire de chargement (9), vidé au moins en partie, pour le sortir du bain après l'écoulement du temps de séjour (15).

2. Procédé selon la revendication 1, selon lequel le temps de séjour (15) est défini au moins avant l'étape C), par les étapes suivantes :
F) détermination d'un poids de vidange moyen (20) pour les objets, rapporté à une unité de temps en fonction du poids de remplissage (16),
G) comparaison du poids de vidange moyen avec le poids de traitement (19), et
H) détermination d'un multiple de l'unité de temps correspondant au temps de séjour (9).

3. Procédé selon la revendication 2, comprenant en outre les étapes suivantes :
I) détermination d'un poids moyen (17) pour les objets stockés dans le moyen auxiliaire de chargement (9), et
J) détermination du poids de vidange moyen (20), en outre en fonction du poids moyen (17).

4. Procédé selon l'une des revendications 1 à 3, selon lequel le moyen auxiliaire de chargement (9), au cours de l'étape D), est tourné d'un angle prédéfini en fonction du poids de remplissage (16) et en fonction du poids de traitement (19).

5. Procédé selon l'une des revendications 1 à 4, selon lequel le courant en moyenne constant est généré par un mouvement horizontal du moyen auxiliaire de chargement (9) dans le bain, dans le sens contraire à un sens de vidange.

6. Procédé selon l'une des revendications 1 à 5, comprenant en outre l'étape suivante :
K) détermination d'un poids de vidange réellement vidangé, à l'aide d'un deuxième pesage.

7. Procédé selon la revendication 6, comprenant en outre l'étape suivante :
L) redéfinition du temps de séjour (15), dépendant du poids de remplissage (16), pour un nouveau poids de traitement correspondant au poids de vidange réellement vidangé.

8. Procédé selon l'une des revendications 1 à 7, comprenant en outre les étapes suivantes :
M) réception du moyen auxiliaire de chargement (9) rempli avec les objets pouvant flotter, depuis un point d'alimentation (21), au moins avant l'étape B), et
N) transfert du moyen auxiliaire de chargement (9) vidangé au moins partiellement, à un point de transfert (22), au moins après l'étape E).

9. Dispositif de mise en oeuvre du procédé selon l'une des revendications 1 à 8, comprenant un bâti (2), auquel est associé une structure de déplacement (3) qui peut être déplacé dans le sens longitudinal de celui-ci et qui présente un chariot de levage (6) déplaçable dans la direction verticale et doté de moyens (7; 8) pour saisir un moyen auxiliaire de chargement (9) rempli d'objets pouvant flotter, comprenant en outre au moins une cellule de pesage (10) pour le pesage des moyens auxiliaires de chargement (9) saisis par le chariot de levage (6), et comprenant un ordinateur de commande, doté d'une mémoire, pour commander la structure de déplacement (3), la mémoire de l'ordinateur de commande comportant une base de données (14) dans laquelle est enregistré un temps de séjour (15) qui est nécessaire pour un poids de traitement devant faire l'objet d'une vidange partielle et qui est fonction d'un poids de remplissage (16) déterminé au moyen de la cellule de pesage (10).

10. Dispositif selon la revendication 9, comprenant en outre un bac pour un bain et comprenant une pompe de circulation pour la génération d'un courant dans le bain.

11. Dispositif selon la revendication 9 ou 10, dans lequel il est prévu un capteur (8) pour identifier un moyen d'identification (10) disposé sur le moyen auxiliaire de chargement (9).

12. Dispositif selon la revendication 11, dans lequel le moyen d'identification (10) contient un poids moyen (17) des objets stockés dans le moyen auxiliaire de chargement (9) et pouvant flotter.

13. Dispositif selon l'une des revendications 9 à 12, dans lequel le chariot de levage (6) comprend des moyens (12; 13) pour la rotation du moyen auxiliaire de chargement (9).

14. Dispositif selon la revendication 12 ou 13, dans lequel le temps de séjour (15) enregistré dans la base de données (14) de la mémoire dépend du poids moyen (17) déterminé à l'aide du capteur.

15. Procédé de calibrage d'un dispositif selon l'une des revendications 9 à 14, ledit procédé comprenant les étapes suivantes :
- vidange partielle d'un poids de traitement minimal d'objets à partir d'un moyen auxiliaire de chargement (9) presque complètement rempli, selon le procédé conforme à la revendication 6,
- vidange partielle d'un poids de traitement maximal d'objets à partir d'un moyen auxiliaire de chargement (9) presque complètement rempli, selon le procédé conforme à la revendication 6, et
- vidange partielle du poids de traitement minimum d'objets à partir d'un moyen auxiliaire de chargement (9) presque vide, selon le procédé conforme à la revendication 6.
